# EUROPEAN PATENT APPLICATION

(11) **EP 1 533 533 A1**
(43) Date of publication of application: **25.05.2005**
(21) Application number: 03760924.5
(22) Date of filing: 20.06.2003
(51) Int. Cl.: F16C 19/08, F16C 19/18, F16C 33/78, F16C 33/58, F16C 33/42, F16C 33/32, F16C 13/02

(54) **DOUBLE-ROW BALL BEARING FOR SUPPORTING PULLEY**

(30) Priority: 25.06.2002 JP 2002183760
(71) Applicant: NSK LTD.,, Shinagawa-ku, Tokyo 141-8560 (JP)
(72) Inventor: OHATA, Toshihisa c/o NSK LTD., Fujisawa-shi, Kanagawa 251-0021 (JP); ISHIGURO, Hiroshi c/o NSK LTD., Fujisawa-shi, Kanagawa 251-0021 (JP)
(74) Representative: Moreland, David, Dr.
(86) International application number: PCT/JP2003/007879
(87) International publication number: WO 2004/001242

(57) **Abstract**

In a pulley support double row ball bearing, with a construction which uses small diameter balls 44 so that the axial dimensions are minimized, a construction is realized which ensures an amount of grease filled in an inner space 47, and is able to effectively utilize this grease. In order to enhance the lubrication of the rolling contact portions, and be able to miniaturize and lighten automobile auxiliary equipment incorporating a double row ball bearing 32a, while ensuring durability of the double row ball bearing 32a, in the present invention, a chamfer 49 is provided in a portion near both ends of the inner circumferential surface of an outer ring 40, so that grease can be easily filled to inside the inner space 47, and the amount of grease filled inside the inner space 47 is ensured. Moreover, a retainer 45 is provided with an offset radially inwards of the pitch circle of the balls 44 so that the grease filled inside the inner space 47 is effectively fed to the rolling contact portions.

## Description

### TECHNICAL FIELD

The pulley support double row ball bearing according to the present invention, for example, is built into automotive auxiliary equipment such as a compressor constituting an automotive interior air conditioning apparatus, and is used for rotatably supporting a pulley for rotationally driving the automotive auxiliary equipment with respect to a fixed support member such as a housing.

### BACKGROUND ART

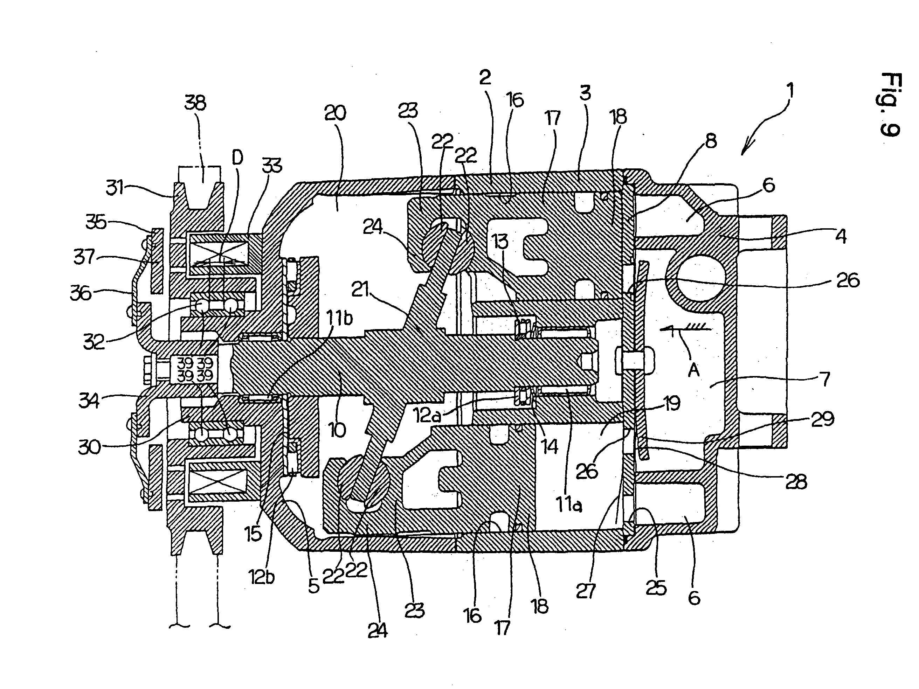

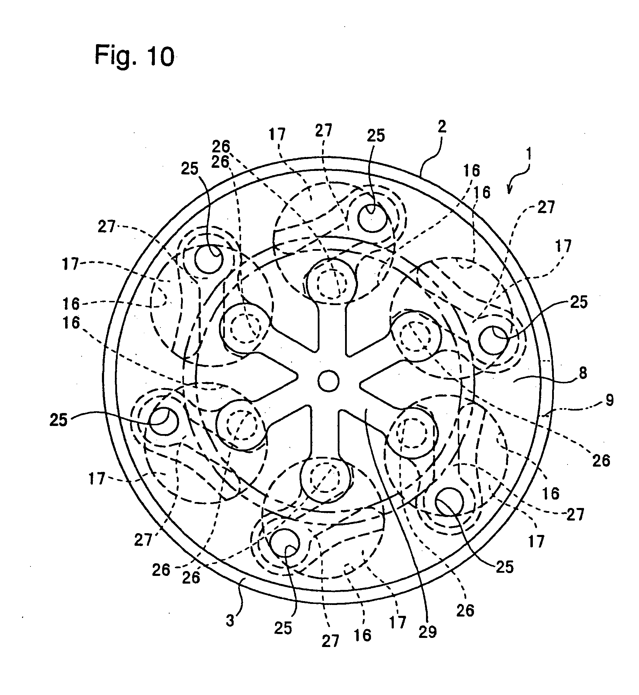

For example, as a compressor for compressing refrigerant, which is built into a vapor compression type refrigerator built into an automotive air conditioning apparatus, conventionally several types of mechanism are known. For example, Japanese Unexamined Patent Publication No. H 11-280644 discloses a swash-plate type compressor which converts rotational motion of a rotation shaft into reciprocating motion of a piston using a swash-plate, and performs compression of refrigerant by this piston. FIG 9 and FIG 10 illustrate one example of such a conventionally known swash-plate type compressor.

A casing 2, constituting a compressor 1, is formed by sandwiching a central main body 3 between a head case 4 and a swash-plate case 5 from both sides in the axial direction (left-right direction in FIG. 9), and then joining these with a plurality of fastening bolts (not shown). On the inside of the head case 4, there is provided a low pressure chamber 6 and a high pressure chamber 7. Also, between the main body 3 and the head case 4, a tabular partition plate 8 is sandwiched. The low pressure chamber 6, which is shown in FIG. 9 as if divided into a plurality of sections, has the sections communicating with each other and connected to a single inlet port 9 (FIG. 10) provided on the outside surface of the head case 4. Furthermore, the high pressure chamber 7 is connected to an outlet port (not shown) also provided on the head case 4. Moreover, the inlet port 9 is connected to the outlet of an evaporator (not shown) constituting this vapor compression type refrigerator, and the outlet port is connected to the inlet of a condenser (not shown) constituting this vapor compression type refrigerator.

Within the casing 2, a rotation shaft 10 in a state of spanning between the main body 3 and the swash-plate case 5, is freely supported for rotation alone. That is to say, both ends of the rotation shaft 10 are supported by a pair of radial needle bearings 11a and 11b, on the main body 3 and the swash-plate case 5, and the thrust load exerted on this rotation shaft 10 is freely supported by a pair of thrust needle bearings 12a and 12b. Of the pair of thrust needle bearings 12a and 12b, one (right hand side in FIG 9) thrust needle bearing 12a is provided between a part of the main body 3 and a step portion 13 formed on one end (right end in FIG 9) of the rotation shaft 10, via a disc spring 14. Also, the other thrust needle bearing 12b is provided between a thrust plate 15 externally fitted to the outer circumferential surface of an intermediate part of the rotation shaft 10 and the swash-plate case 5.

Moreover, on the inside of the main body 3 constituting the casing 2 surrounding the rotation shaft 10, is formed a plurality (for example in the example shown on the figure, there are six evenly spaced in the circumferential direction) of cylindrical bores 16. Inside the plurality of cylindrical bores 16 formed in such a way on the main body 3, a sliding portion 18 provided at the tip half portion (right half of FIG 9) of the respective pistons 17 is fitted to allow free displacement in the axial direction. Moreover, the space between the bottom face of the cylindrical bore 16 and the tip end surface of the piston 17 (right end surface in FIG 9) serves as a compression chamber 19.

Furthermore, the space which exists on the inside of the swash-plate case 5 serves as a swash-plate chamber 20. On the outer circumferential surface of the intermediate part of the rotation shaft 10 located within this swash-plate chamber 20, a swash-plate 21 is fixed with a predetermined inclination angle with respect to the rotation shaft 10 such that this swash-plate rotates together with the rotation shaft 10. A plurality of locations in the circumferential direction of the swash-plate 21 and each of the pistons 17 are individually linked by means of a pair each of sliding shoes 22. Therefore, internal surfaces (mutually facing surfaces) of these individual sliding shoes 22 are made smooth faces, and are slidingly contacted with a part near the outer diameter on both side faces of the swash-plate 21 which are similarly smooth faces. On the other hand, on the base end portion of the respective portions 17 (the end portion farther from the partition plate 8; the left end portion in FIG.9), is formed integral with each of the pistons 17, a connection portion 23 which together with the sliding shoes 22 and the swash-plate 21 constitutes a driving force transfer mechanism. Moreover, a holding portion 24 for holding the pair of sliding shoes 22 is formed on the connecting portions 23.

The outside end surface of each of the connecting portions 23, by means of a guide surface (not shown in the figure), is allowed free displacement only in the axial direction (left-right direction in FIG. 9) of the piston 17. Therefore, each of the pistons 17 is also fitted within the cylindrical bore 16 in such a way as to allow displacement only in the axial direction (rotation is not possible). As a result, each of the connecting portions 23 pushes and pulls each of the pistons 17 in the axial direction in accordance with the oscillating reciprocal displacement of the swash-plate 21 due to the rotation of the rotation shaft 10, and reciprocates each of the sliding portions 18 within the cylindrical bore 16 in the axial direction.

On the other hand, in the partition plate 8, which is sandwiched at the contact portion between the main body 3 and the head case 4, for partitioning the low pressure chamber 6, the high pressure chamber 7 and each of the cylindrical bores 16, is formed penetrating in the axial direction, an inlet 25 for communicating between the low pressure chamber and each cylindrical bore 16, and an outlet for communicating between the high pressure chamber 7 and each cylindrical bore 16. Also, in the part of each of the cylindrical bores 16 which faces one end of each of the inlets 25, is provided a reed valve type inlet valve 27, which allows only flow of refrigerant vapor from the low pressure chamber 6 to each of the cylindrical bores 16. Also, in the part of the high pressure chamber 7 which faces the opening on the other end (right side in FIG 9) of the outlet 26, is provided a reed valve type outlet valve 28, which allows only flow of refrigerant vapor from the cylindrical bore 16 to the high pressure chamber 7. In this outlet valve 28, a stopper 29, which restricts displacement in the direction away from each of the outlet valve 26, is attached.

The rotation shaft 10 of the compressor 1 constructed in the above manner is driven by the propulsion engine of an automobile. Therefore, in the case of the example shown in the figure, on the periphery of a support member, in other words a support cylinder 30, provided at the center of the outside surface (left side surface in FIG. 9) of the swash-plate case 5 constituting the casing 2, is rotationally supported a driven pulley 31, by means of a double-row bearing. This driven pulley 31 is constructed in an overall annular form with a C-shaped cross section, and a solenoid 33, which is fixed to the outside surface of the swash-plate case 5, is provided within an internal cavity of the driven pulley 31.

On the other hand, at an end portion of the rotation shaft, which protrudes from the support cylinder 30, is fixed a mounting bracket 34, and around the circumferential surface of this mounting bracket 34, is supported an annular plate of magnetic material, via a plate spring 36. This annular plate 35, when there is no current through the solenoid 33, is separated from the driven pulley 31 due to the elasticity of the plate spring 36, as shown in FIG 9. However, when there is a current through the solenoid 33, it is attracted towards this driven pulley 31, and hence allows the transmission of torque from this driven pulley 31 to the rotation shaft 10. That is to say, the solenoid 33, the annular plate 35 and the plate spring 36, constitute an electromagnetic clutch 37 for connecting and disconnecting the driven pulley 31 and the rotation shaft 10. Also, between the driving pulley fixed to the end of the crank shaft of the propulsion engine and the driven pulley 31, is spanned an endless belt 38. Furthermore, in a state where the driven pulley 31 and the rotation shaft 10 are connected by the electromagnetic clutch 37, the rotation shaft 10 is rotated based on the rotation of the endless belt 38.

The operation of the swash-plate type compressor 1 formed in the above manner is as follows. That is to say, in order to perform cooling and dehumidification of the automobile interior, in the case of operating a vapor compression type refrigerator, the rotation shaft 10 is rotated by the propulsion engine, being the driving source. As a result, the swash-plate 21 rotates, and the sliding portions 18 constituting the multiple pistons 17 reciprocate within the respective cylindrical bores 16. Furthermore, in accordance with such reciprocation of the sliding portions 18, the refrigerant vapor sucked in from the inlet port 9 is sucked from the low pressure chamber 6 through each inlet 25 into the compression chambers 19. This refrigerant vapor, after being compressed inside each of the compression chambers 19, is sent out to the high pressure chamber 7 via the outlets 26, and discharged from the outlet port.

The compressor shown in FIG 9 is one in which the inclination angle of the swash-plate with respect to the rotation shaft is unchangeable, and hence the refrigerant discharge volume is fixed. On the other hand, a variable displacement swash-plate type compressor in which the inclination angle of the swash-plate with respect to the rotation shaft can be changed in order to change the discharge volume in accordance with cooling load and the like, is conventionally widely known from, for example, the disclosure of Japanese Unexamined Patent Publication No. H 8-326655 and so on, and is commonly implemented. Moreover, as a compressor for a vapor compression type refrigerator constituting an automobile air conditioning apparatus, the use of a scroll type compressor is also being researched in some places. Furthermore, in relation to a conventional compressor in which a piston is reciprocated by means of a ball joint, this is still also being used in some places.

Whichever the structure of the compressor used, the compressor constituting the automobile air conditioning apparatus is driven by the endless belt spanning between the driving pulley fixed to the end of the crank shaft of the propulsion engine and the driven pulley provided on the compressor side. Therefore, a radial load based on the tension force of the endless belt, is exerted on the bearing which rotatably supports the driven pulley. In order to perform reliable power transmission without slippage, between the endless belt and each of the pulleys, the tension force on the endless belt, in other words, the radial load, becomes correspondingly large. Therefore, as a bearing for supporting the driven pulley, in order to support this large radial load, it is necessary to use one with sufficient load capacity.

When the double row ball bearing 32 incorporated in the conventional structure shown in FIG. 9 is viewed from this perspective, the spacing D of balls 39 arranged in a double row is large, and hence the structure is said to be one which can ensure sufficient load capacity. However, with the double row ball bearing 32, the dimensions in the axial direction becomes bulky. On the other hand, recently, in consideration of the global environment, in an attempt to improve fuel efficiency of automobiles, miniaturization and lightening of automobile auxiliary equipment such as the compressor is demanded. Furthermore, a demand has also arisen for shortening of the axial dimensions of rolling bearings for supporting driven pulleys incorporated into automobile auxiliary equipment.

In response to such demands, as a rolling bearing for supporting the driven pulley, the use of single row deep groove ball bearings and three point or four point contact type ball bearings is being researched. However, with such ball bearings, rigidity with respect to the load, mainly the moment load, exerted on the driven pulley, cannot be easily ensured, and it is difficult to ensure a sufficient low-vibration property (propensity for not vibrating) or durability. That is to say, there are occasions where, though slight in magnitude, the moment load from the driven pulley acts on the rolling bearing. However, rigidity of the single row deep groove type ball bearing with respect to the moment load is low. Also, regarding the three point to four point contact type ball bearing, though rigidity with respect to the moment load is higher than the ordinary single row deep groove type ball bearing, there are occasions where the rigidity is not always sufficient due to the relationships such as the magnitude of the tension force on the endless belt or the arrangement (eccentricity between the direction of radial load and the location of the ball bearing center). As a result, vibration as well as noise during the operation becomes more likely, and it is difficult to ensure durability.

The pulley support double row ball bearing of the present invention was invented in consideration of such circumstances.

### RELATED ART

With such circumstances in mind, the present inventor first thought of ensuring the required rigidity by reducing the diameter of the balls and reducing the spacing between the balls arranged in double rows, as well as supporting the driven pulley using a double row ball bearing with reduced dimensions related to the axial direction (Japanese Patent Application No. 2002-24863, Japanese Patent Application No. 2002-97966). In the case of a pulley supporting double row ball bearing according to these related inventions, one having an outer ring with an outer diameter of less than or equal to 65 mm and a double row of outer ring raceways on the inner circumferential surface is used. Also, an inner ring having a double row of inner ring raceways on the outer circumferential surface is used. Moreover, balls with a diameter (major diameter) of less than or equal to 4 mm are used, and several of these are provided so as to roll freely between each of the outer ring raceways and each of the inner ring raceways. Also, by using a retainer, each of the balls are held so as to allow free rolling. Moreover, a pair of seal ring is used to seal off the openings on both sides of the inner space accommodating each of the balls between the inner circumferential surface of the outer ring and the outer circumferential surface of the inner ring. Furthermore, the spacing between the balls, and the spacing between the balls and the seal ring are reduced, thus providing a double row ball bearing with an overall width in the axial direction (approximately coinciding with the outer ring width and inner ring width) of less than or equal to 45% of the inner diameter of this inner ring.

Also, in order to reduce the spacing between the balls, a crown shaped retainer made of synthetic resin is used for each of the retainers, and rims of each of the retainers are provided to oppose each other from opposite sides (= outsides in the axial direction = sides opposed to the seal ring). Also, the distance between the rim of each of the retainers and the inside surface of the seal ring is reduced. However, again in this case, the distance between the rim of each of the retainers and the inside surface of each seal ring is ensured to be more than or equal to 13% of the diameter of each of the balls such that the filling amount of the grease within the inner space accommodating each of the balls, between both of the seal rings can be ensured.

According to the pulley support double row ball bearing associated with the related invention, moment rigidity is ensured, while the width related to the axial direction is reduced, and it is possible to contribute to the realization of small and light automobile auxiliary equipment, which produces low noise during operation.

With the pulley support double row ball bearing associated with the related invention, the static spatial volume of the inner space accommodating several balls between the pair of seal rings, that is to say, the volume of the inner space enclosed within the inner circumferential surface of the outer ring, the outer circumferential surface of the inner ring and the inner surface of both of the seal rings, minus the volume of each of the balls and the retainers becomes small. Of course, the grease for lubricating the rolling contact portions of the rolling surfaces of the balls, the outer ring raceway and the inner ring raceway, cannot be filled in the inner space if its volume exceeds the static volume of the inner space.

Therefore, in order to ensure sufficient lubrication at the rolling contact portions and to ensure the durability of the pulley support double row ball bearing, the amount of grease to be filled within the inner space needs to be ensured, or otherwise it is necessary to realize a structure which effectively utilizes the grease filled within this inner space.

### DISCLOSURE OF THE INVENTION

Any of the pulley support double row ball bearings according to the present invention, in a similar manner to the aforementioned pulley support double row ball bearing associated with the related invention, is provided with: an outer ring with an outer diameter of less than or equal to 65 mm and having a double row outer ring raceway on an inner circumferential surface; an inner ring having a double row inner ring raceway on an outer circumferential surface; balls with a diameter of less than or equal to 4 mm, provided as several balls so as to be free rolling between the outer ring raceways and the inner raceways; a retainer which holds these balls so as to be free rolling; and a seal ring, which exists between the inner circumferential surface of the outer ring and the outer circumferential surface of the inner ring, and seals off openings on both ends of an inner space accommodating the balls. Furthermore, a width related to the axial direction is less than or equal to 45% of the inner diameter of the inner ring, and by externally fitting this inner ring to a support member and internally fitting the outer ring to a pulley, the pulley is rotatably supported on the periphery of this support member.

Specifically, in the first aspect of the pulley support double row ball bearing according to the present invention, near both ends of the inner circumferential surface of the outer ring, on the axially outside ends of continuous portions that exists between each of the outer ring raceways and a large diameter portion provided on both ends of this inner circumferential surface for stoppingly engaging with a seal ring, there is provided a chamfer having an axial length which is more than or equal to 30% of the axial length of the continuous portion, and which tapers in a direction of increasing inner diameter as it approaches the large diameter portion.

Moreover, in a second aspect of the pulley support double row ball bearing according to the present invention, with regard to the radial dimensions, each of the outer ring raceways is made shallower than each of the inner ring raceways.

Furthermore, in a third aspect of the pulley support double row ball bearing according to the present invention, each of the retainers is designed such that inside surfaces of respective pockets are adjacent to and facing the rolling surface of each of the balls, and the radial positioning is determined by the balls, and a difference between a pitch diameter of a series of the balls and an inner diameter of the retainer is greater than a difference between an outer diameter of the retainer and this pitch diameter.

Moreover, in a fourth aspect of the pulley support double row ball bearing according to the present invention, each of the retainers is designed such that inside surfaces of respective pockets are adjacent to and facing the rolling surface of each of the balls, and the radial positioning is determined by the balls, and a difference between an inner diameter of the outer ring and an outer diameter of the retainer is greater than a difference between an inner diameter of the retainer and an outer diameter of the inner ring.

Also, in a fifth aspect of the pulley support double row ball bearing according to the present invention, a'back-to-back duplex type contact angle is given to each of the balls arranged in a double row, and an inner diameter of the outer ring on the axially outside portion, being an anti-loading side, of each of the outer ring raceways is greater than the largest diameter of each of the outer ring raceways.

In addition, in a sixth aspect of the pulley support double row ball bearing according to the present invention, a face-to-face duplex type contact angle is given to each of the balls arranged in a double row, and an inner diameter of the outer ring on an axially inside portion, being an anti-loading side, of each of the outer ring raceways is greater than the largest diameter of each of the outer ring raceways.

With a pulley support double row ball bearing of the present invention constructed in the above manner, the amount of grease to be filled within the inner space can be ensured, or the grease filled within the inner space can be effectively utilized, sufficient lubrication at the rolling contact portions can be ensured, and the durability of the pulley support double row ball bearing can be ensured.

First, in the case of the first aspect of the pulley support double row ball bearing according to the present invention, at the time of filling of the grease into the inner space, the chamfer guides the grease and feeds the grease further into the inner space. Therefore, the amount of grease to be filled within the inner space can be ensured.

Next, in the case of the second aspect, the grease that is fed radially outwards by centrifugal force during operation and reaches the inner circumferential surface of the outer ring, is efficiently fed to the rolling contact portions between the rolling surfaces of each ball and each outer ring raceway.

Next, in the case of the third and fourth aspects, because the radial position of each retainer is constrained by guidance of the balls, a gap is formed between both the inner and outer circumferential surfaces of each retainer and the outer circumferential surface of the inner ring and the inner circumferential surface of the outer ring, and hence grease can be fed to the rolling contact portions through this gap. Moreover, in any of the cases, because the retainers exist on the inner diameter side of the central position between the outer circumferential surface of the inner ring and the inner circumferential surface of the outer ring, the thickness of the gap between the outer circumferential surface of each of the retainers and the inner circumferential surface of the outer ring is increased. Therefore, in the same manner as the case of the second embodiment, the grease, which is fed radially outward by centrifugal force during operation and reaches the inner circumferential surface of the outer ring, can be efficiently fed to the rolling contact portion between the rolling surface of each ball and each outer ring raceway.

In addition, in the case of the fifth and sixth aspects, by enlarging the inner diameter of the outer ring on the anti-loading side portion, the static spatial volume can be increased and the amount of grease able to be filled within the inner space can be increased.

### BRIEF DESCRIPTION OF THE DRAWINGS

FIG. 1 is a cross-sectional view illustrating a first example of an embodiment of the present invention.
FIG. 2 is an enlarged view of the upper right part of FIG. 1.
FIG 3 is a schematic cross-sectional view illustrating a second example of a chamfer-shape, with part of the upper left part of FIG. 1 omitted.
FIG. 4 is a view similar to FIG. 2 showing a second example of an embodiment of the present invention.
FIG 5 is a partial cross-sectional view showing a third example of an embodiment of the present invention, with the inner ring omitted.
FIG. 6 is a partial cross-sectional view showing a fourth example of an embodiment of the present invention, with the inner ring omitted.
FIG 7 is a partial perspective view showing one example of a preferable form of a retainer.
FIG. 8 is one example of the preferable form of the retainer, viewed from the radial direction.
FIG 9 is a cross-sectional view showing one example of a conventionally know compressor.
FIG. 10 is a view on arrow A in FIG. 9.

### BEST MODE FOR CARRYING OUT THE INVENTION

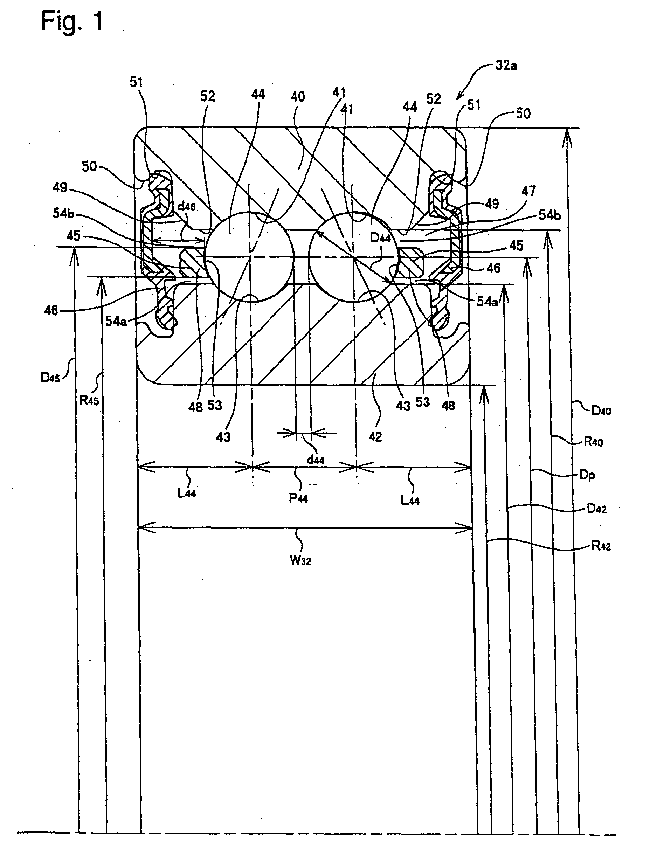

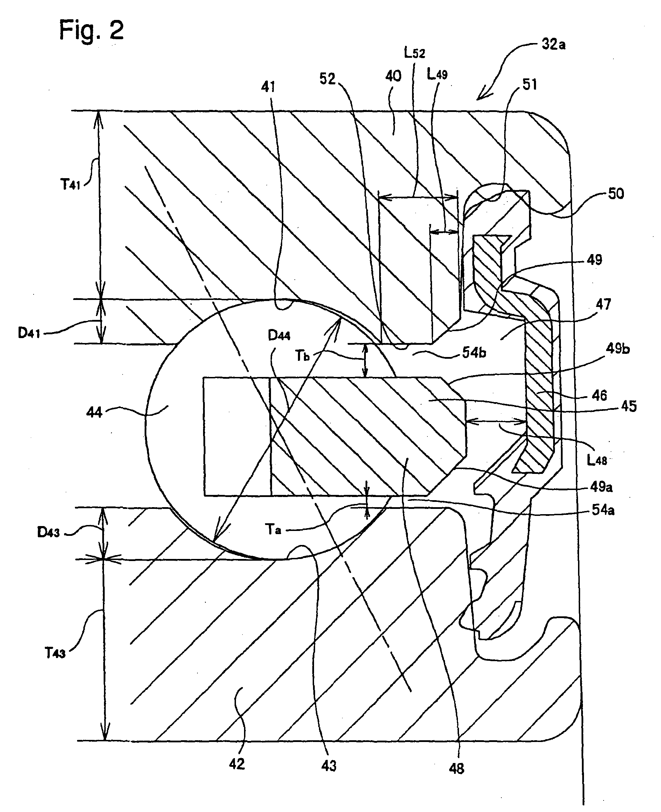

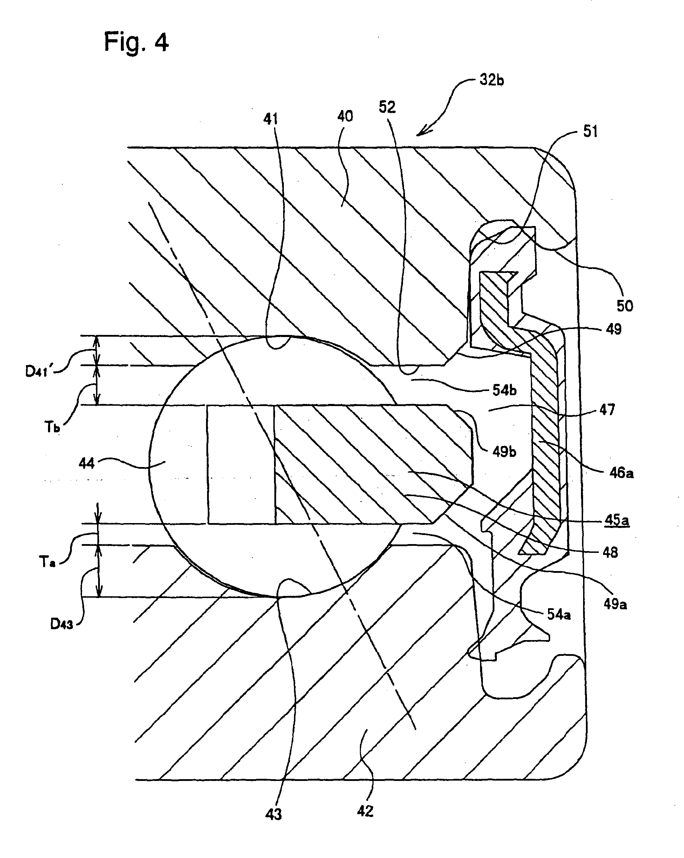

FIG. 1 through FIG. 3 illustrate a first example of an embodiment of the present invention, corresponding to a first aspect, a second aspect, a third aspect and a fourth aspect. Regarding FIG 1 and FIG 2 (as well as FIG 4 through FIG 6 to be mentioned hereunder), the proportions of individual parts are drawn to match the actual proportions. In the case of a pulley support double row ball bearing 32a of the present example, for an outer ring 40, one with an outer diameter D₄₀ less than or equal to 65 mm (D₄₀ ≤ 65 mm) and having a double row outer ring raceway 41 on the inner circumferential surface is used. Also for an inner ring 42, one having a double row inner ring raceway 43 on the outer circumferential surface is used. In the case of the present example, a depth D₄₁ of each of the outer ring raceways 41 and a depth D₄₃ of each of the inner ring raceways 43 are mutually equal (D₄₁ = D₄₃). Also, balls 44 with diameters (outer diameters) D₄₄ less than or equal to 4 mm (D₄₄ ≤ 4 mm) (3 to 4 mm in practice) are used, and are provided between each of the outer ring raceways 41 and each of inner ring raceways 43 in a group of several balls so as to allow free rolling. Moreover using a pair of retainers 45, the balls 44 are held in place while allowing them to roll freely, and a pair of seal rings 46 is used to seal the openings on both ends of an inner space 47 which exists between the inner circumferential surface of the outer ring 40 and the outer circumferential surface of the inner ring 42, and accommodates the balls 44. Throughout the drawings, the same reference symbols are attached to the same members.

Furthermore, by reducing a spacing d₄₄ between each of the balls 44 provided in double rows between each of the outer ring raceways 41 and each of inner ring raceways 43 in a group of several balls, and a spacing d₄₆ between these balls 44 and the inside face of each of the seal rings 46, a width W₃₂ related to the axial direction of the double row ball bearing 32a as a whole, is reduced to less than or equal to 45% of an inner diameter R₄₂ of this inner ring 42 (W₃₂ ≤ 0.45 R₄₂).

Also, in order to reduce the spacing d₄₄ between the balls 44, a crown shaped retainer made of synthetic resin is used for each of the retainers 45, and rims 48 of each of the retainers 45 are provided to oppose each other from opposite sides (= outsides in the axial direction = sides opposed to the seal ring 46). Using this configuration, the spacing d₄₄ between the balls 44 can be reduced without being obstructed by the rims 48. Also, a distance L₄₈ between each of the rims 48 and the inside surface of the seal ring 46 is shortened. However, again in this case, the distance L₄₈ between the rims 48 and the inside surface of each of the seal rings 46 is ensured to be more than or equal to 13% of the diameter D₄₄ of the balls 44 (L₄₈ ≥ 0.13D₄₄), such that the filling amount of the grease within the inner space 47 accommodating the balls 44 between both of the seal rings 44 can be ensured.

Also, in the case of the present example, as a structure corresponding to the first aspect of the present invention, a concave circular-cone-shaped chamfer 49 is formed on the portion near both ends of the inner circumferential surface of the outer ring 40. That is to say, at both ends of the inner circumferential surface of the outer ring 40, a large diameter portion 50 for which the diameter is larger than the central part is formed, and on an axially inner half of each of the large diameter portions 50, a stopper groove 51 for stoppingly engaging with the outer circumference edge portion of each of the seal rings 46 is formed. Furthermore, on the axially outside of a continuous portion 52 that exists between each of the large diameter portions 50 and each of the outer ring raceways 41, there is provided a chamfer 49, which tapers in a direction of increasing inner diameter as it approaches the large diameter portion 50.

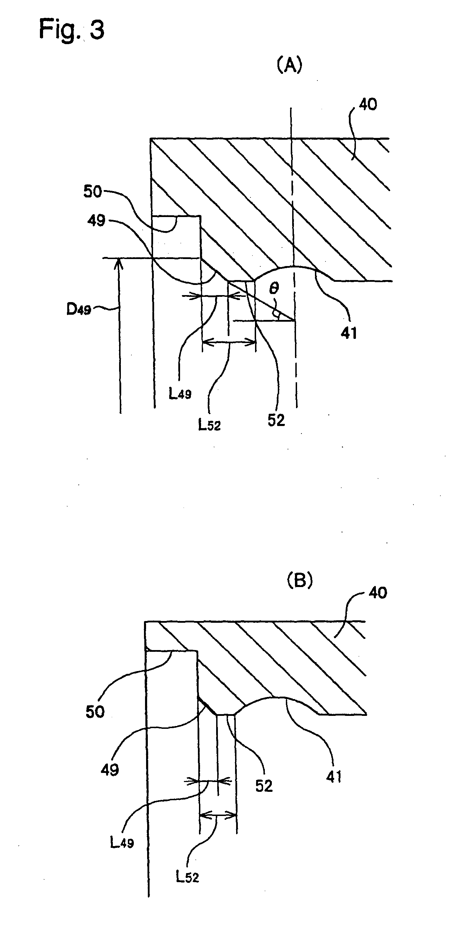

An axial length L₄₉ of each of the chamfers is set to more than or equal to 30% of an axial length L₅₂ (L₄₉ ≥ 0.3L₅₂). For example, in FIG. 3, two examples of each of the chamfer 49 are illustrated. First, in the example shown in FIG. 3 (A), the axial length L₅₂ of the continuous portion 52 is set to about 1.6 mm and the axial length L₄₉ of the chamfer 49 is set to about 0.87 mm. Furthermore, in the example shown in FIG. 3 (B), the axial length L₅₂ of the continuous portion 52 is set to about 1.1 mm and the axial length L₄₉ of the chamfer 49 is set to about 0.5 mm. Moreover, an inclination angle θ of the chamfer 49 with respect to the central axis of the outer ring 40 is regulated in such a way as to facilitate the filling of grease into the inner space 47 by utilizing this chamfer 49 as a guide. That is to say, the largest outer diameter D₄₉ of the chamfer 49 is ensured, and in order for the grease which is pushed with respect to this chamfer 49 during the filling process, to easily flow towards the smaller diameter side of the chamfer 49, the inclination angle is regulated to 30 to 60 degrees. For instance, it is preferable to set the inclination angle to approximately 45 ± 5 degrees.

In the case of the double row ball bearing 32a of the present example, by providing such a chamfer 49 as described above, sufficient grease can be filled into the inner space 47. That is to say, at the time of filling of grease into this inner space 47, a part of the grease which is pushed into the inner space 47 from an injection nozzle (not shown), is fed deep into the inner space 47 while being guided by the chamfer 49. Therefore, the amount of grease to be filled within the inner space 47 can be ensured, and lubrication becomes sufficient and favorable at the rolling contact portion between the rolling surface of each of the balls 44 and each of the outer ring raceways 41 and each of the inner ring raceways 43. Hence the durability of the double row ball bearing 32a can be ensured. Specifically, in the case of the example shown in the figure, chamfers 49a and 49b are also formed on both inner and outer circumferential edges of the outer side face of the rim 48 of each retainer 45. Each of these chamfer 49a and 49b also, function as guides for when filling the grease, and contribute to the ensuring of the amount of grease to be filled within the inner space 47.

Here, while omitted from the figure, a concave part which concaves radially inwards, is formed on one part of the outer circumferential surface of the rim 48 of each of the retainers 45, and by accumulating the grease in this concave part it is also possible to ensure the amount of grease to be filled within inner space 47. Moreover, a concave part which concaves radially outwards, is formed on one part of the connecting portion 52 existing on the portion near both ends of the inner circumferential surface of the outer ring 40 and by accumulating the grease in this concave part it is also possible to ensure the amount of grease to be filled within inner space 47. In either case, on the part corresponding to the concave part, it is desirable to set the spacing in the radial direction between the outer circumferential surface of the retainer and the inner circumferential surface of the outer ring to more than or equal to 15% of the diameter of the balls 44, from the perspective of ensuring the amount of grease.

Moreover, in the case of the present example, as a structure corresponding to the third aspect and the fourth aspect, the positioning of the retainers 45 in the radial direction is each determined by means of ball guidance. That is to say, the inside surface of a pocket 53 of each of the retainers 45 is made into a partial spherical concave surface having a radius of curvature slightly larger than the radius of curvature of the rolling surface of each of the balls 44, such that the inside surface of the pocket 53 closely faces the rolling surface of each of the balls 44. With this configuration, each of the balls 44 are supported so as to be able to roll freely, within the pockets 53 and at the same time positioning of the retainers 45 in the radial direction is determined by each of the balls 44.

While it is common practice to implement the positioning in the radial direction, of the crown-shaped retainers by means of ball-guidance, in the case of general ball-guidance, the pitch circle of the balls and the radial central position of the retainers are coincided. On the other hand, in the case of the present example, each of the retainers 45 is provided with an offset towards the inner diameter side with respect to the pitch circle of each of the balls 44. That is to say, in the case of the present example, in the same manner as described for the third aspect, the difference between a pitch circle diameter D_{P} of the plurality of the balls 44 and an inner diameter R₄₅ of each of the retainers 45 is greater than the difference between an outer diameter D₄₅ of each of the retainers 45 and the pitch circle diameter {(D_{P} - R₄₅) > (D₄₅ - D_{P})}. In other words, in the same manner as the fourth aspect, the difference between an inner diameter R₄₀ of the outer ring 40 and an outer diameter D₄₅ of each of the retainers 45 is greater than the difference between an inner diameter R₄₅ of the retainer 45 and an outer diameter D₄₂ of the inner ring 42 {(R₄₀ - D₄₅) > (R₄₅ - D₄₂)}.

In the case of the double row ball bearing 32a of the present example, the positioning in the radial direction of each of the retainers 45 is determined by means of ball-guidance in the above manner, and by providing an offset towards the inner diameter side with respect to the pitch circle diameter of the balls 44, it is possible to achieve efficient utilization of the grease that exists within the inner space 47. That is to say, because the radial positioning of the retainers 45 is regulated by means of ball-guidance, gaps 54a and 54b, which are sufficient for the grease to flow through, are formed between both inner and outer circumferential surfaces of each of the retainers 45 and the outer circumferential surface of the inner ring 42 and the inner circumferential surface of the outer ring 40. As a result, through both of these gaps 54a and 54b, the grease can be fed into the rolling contact portion between the rolling surface of each of the balls 44 and each of the outer ring raceways 41 and each of the inner ring raceways 43.

Furthermore, each of the retainers 45 exists, in the radial direction, on the inner-diameter side relative to the central position (in the present example, the same position as that of the pitch circle of each of the balls 44) between the outer circumferential surface of the inner ring 42 and the inner circumferential surface of the outer ring 40. Therefore, a thickness T_{b} of the gap 54b between the outer circumferential surface of each of the retainers 45 and the inner circumferential surface of the outer ring 40 is greater than a thickness Tₐ of the gap 54a between the inner circumferential surface of each of the retainers 45 and the outer circumferential surface of the inner ring 42 (T_{b} > Tₐ). Therefore, during the operation of the double row ball bearing 32a, the grease which is sent radially outward by means of centrifugal force and reaches the inner circumferential surface of the outer ring 40, is fed efficiently to the rolling contact portion between the rolling surface of each of the balls 44 and each of the outer ring raceways 41. The grease which adheres to the rolling surface of each of the balls 44 fitted into these rolling contact portions is fed directly to the rolling contact portion between the rolling surface of each of the balls 44 and each of the inner ring raceways 43. As a result, the lubrication condition of the rolling contact part becomes desirable.

Moreover, in the case of the present example, on one part of the outer ring 40 and the inner ring 42, the thicknesses T₄₁ and T₄₃ of the thin portions corresponding to the bottom parts of the outer ring raceway 41 and the inner ring raceways 43 respectively, are set to more than or equal to 50% of the diameter D₄₄ of each of the balls 44 (T₄₁, T₄₃ ≥ 0.5D₄₄). Furthermore, in the case of internally fitting the outer ring 40 to a pulley made of synthetic resin or aluminum alloy, or externally fitting the inner ring 42 to the supporting cylinder 30 (refer to FIG. 9) made of aluminum alloy, this configuration prevents the internal gap of the double row ball bearing 32a from becoming excessively small (negative absolute value of the internal gap becomes large).

That is to say, in recent years, with an object of reducing weight, the manufacture of the pulley using synthetic resin or aluminum alloy, and the manufacture of the casing 2 including the supporting cylinder 30 (refer to FIG 9) using aluminum alloy are each being carried out. However, the coefficient of linear expansion of synthetic resin and aluminum alloy are in both cases greater than the coefficient of linear expansion of the bearing steel used to make the outer ring 40 and the inner ring 42. Hence, on the inner ring 42 externally fixed by an interference fit to the supporting cylinder 30, an outward radial force is exerted from the supporting cylinder 30 accompanying a temperature rise. Also, if for the outer ring internally fitted to the pulley, the fitting-interference of the outer ring with respect to the pulley is increased in order to prevent creep with respect to the pulley during temperature rise, a large force in the inward radial direction will be exerted on the outer ring at normal temperature. When in this manner, large forces are exerted in the radial direction on the inner ring 42 and on the outer ring 40, the diameters of the inner ring 42 and the outer ring change, and as mentioned above, the internal gap of the double row ball bearing 32a becomes excessively small so that there is a possibility of the durability of the double row ball bearing 32a being degraded. On the other hand, in the case of the present example, because on one part of the outer ring 40 and the inner ring 42, the thicknesses T₄₁ and T₄₃ are ensured for the thin parts corresponding to the bottom of the outer ring raceway 41 and the inner ring raceways 43 respectively, changes in the radial direction of the dimensions of the outer ring 40 and the inner ring 42 are restrained, and degradation of the durability of the double row ball bearing 32a can be prevented.

In the example shown in the figure, the axial length L₄₄ between the center of each row of the balls 44 and the axial end faces of the outer ring 40 and the inner ring 42 is greater than the pitch P₄₄ among the rows of the balls 44 arranged in the double row (P₄₄ < L₄₄). With this configuration, the smallest necessary volume is ensured for the inner space 47 such that the necessary amount of grease can be filled into this inner space 47. At the same time, by preventing the filling ratio of grease (amount of grease filled / static space volume) becoming excessively high (becoming close to 100%), leakage of the grease is prevented.

Next, FIG 4 illustrates a second example of an embodiment of the present invention, corresponding to the first aspect and the second aspect. In the case of the double row ball bearing 32b of the present example, standard ball-guidance is used as the structure for determining the radial positioning of the retainers 45a, and the pitch circle of the balls 44 and the radial central position of the retainer 45a are coincided. However, in the present example, the depth D₄₁' of the outer ring raceways 41 is set shallower than the depth D₄₃ of the inner ring raceways 43 (D₄₁ < D₄₃). Together with this, in the present example also, in the same manner as the abovementioned first example, the thickness T_{b} of the gap 54b between the outer circumferential surface of each of the retainers 45a and the inner circumferential surface of the outer ring 40 is greater than the thickness Tₐ of the gap 54a between the inner circumferential surface of each of the retainers 45a and the outer circumferential surface of the inner ring 42 (T_{b} > Tₐ). Moreover, in the present example, the structure of the seal ring 46a is different from the abovementioned first example. Since the configuration and operation of other parts are the same as the first example, duplicated description is omitted.

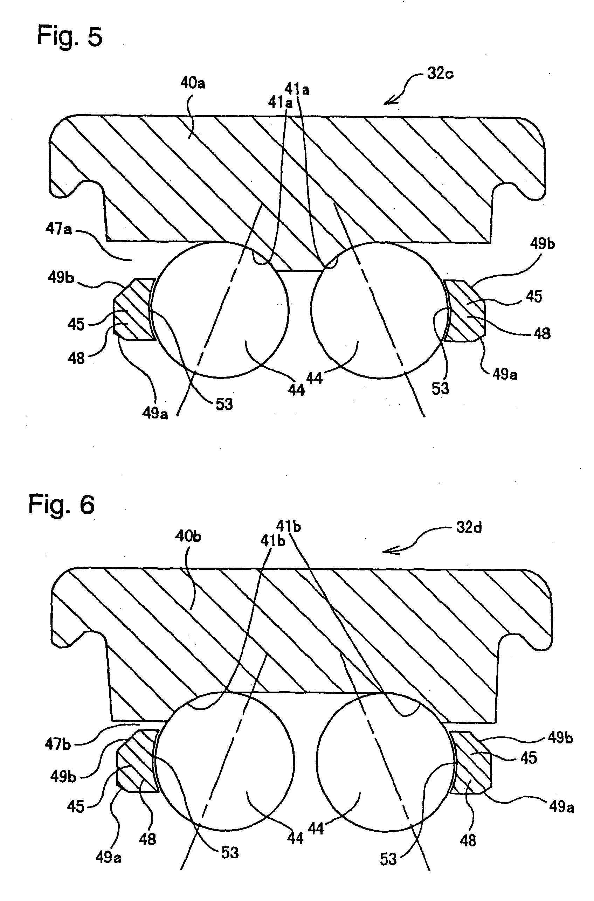

Next, FIG. 5 illustrates a third example of an embodiment of the present invention, corresponding to a fifth aspect. In the case of a double row ball bearing 32c of the present example, a back-to-back duplex type contact angle is given to each of the balls 44 arranged in the double row. To match this, on the inner circumferential surface of the outer ring 40a, there is formed a pair of outer ring raceways 41a, being angular type with each facing outward in the axial direction. Furthermore, the inner diameter of the outer ring 40a on the axially outside of each of the outer ring raceways 41a, being the anti-loading side, is greater than or equal to the largest diameter of each of the outer ring raceways 41a. That is to say, the inner diameter of the outer ring 40a is the smallest at the interval portion between both of the outer ring raceways 41a, and at both outside ends of both of the outer ring raceways 41a, the inner diameter is set larger than the interval portion, such that a so-called groove depth is zero.

In the case of the double row ball bearing 32c of the present example constituted in the above manner, by enlarging the inner diameter of the outer ring 40a at the anti-loading side portion, the static spatial volume is increased, and the amount of grease able to be filled within the inner space 47a can be increased. Furthermore, because the inner diameter is large on the part close to both outside ends of the inner circumferential surface of the outer ring 40a, grease can be easily filled into the inner space 47a, and hence a sufficient amount of grease can be filled into the inner space 47a. As a result, lubrication of the rolling contact portions is also improved, and the durability of the double row ball bearing 32c can be ensured.

Next, FIG. 6 illustrates a fourth example of an embodiment of the present invention, corresponding to a sixth aspect. In the case of a double row ball bearing 32d of the present example, a face-to-face duplex type contact angle is given to each of the balls 44 arranged in the double row. To match this, on the inner circumferential surface of the outer ring 40b, there is formed a pair of outer ring raceways 41b, being angular type with each facing inwards in the axial direction. Furthermore, the inner diameter of the outer ring 40b at the interval portion between the outer ring raceways 41b, being the anti-loading side, is greater than the largest diameter of each of the outer ring raceways 41b. That is to say, the inner diameter of the outer ring 40b is the smallest at both outside ends of both of the outer ring raceways 41b, and at the interval portion between both of the outer ring raceways 41b, the inner diameter is set larger than both end portions such that a so-called groove depth is zero.

In the case of the double row ball bearing 32d of the present example constituted in the above manner, by enlarging the inner diameter of the outer ring 40b at the anti-loading side portion, the static spatial volume is increased, and the amount of grease able to be filled within the inner space 47b can be increased. Especially, the grease that flows outward in the radial direction due to the centrifugal force that acts during operation, is collected at the widthwise central part of the outer ring 40b, that is, the portion between both of the outer ring raceways 41b, and hence the grease can be efficiently supplied to the rolling contact portions. As a result, lubrication on the rolling contact portions is also improved, and the durability of the double row ball bearing 32d can be ensured.

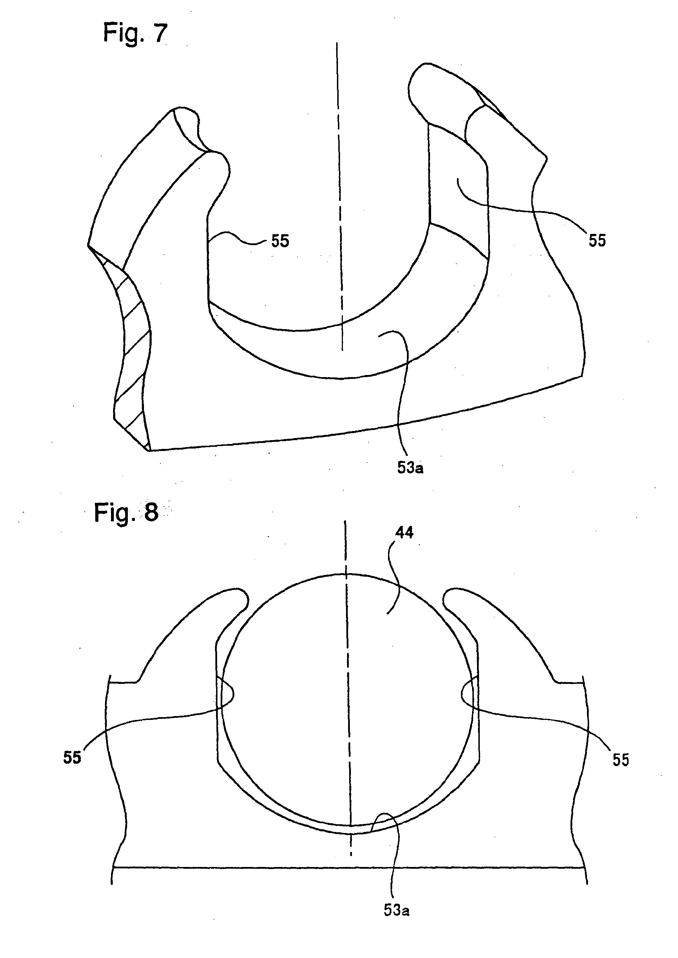

In the case of implementing the present invention, by devising the form of the retainer or contriving the materials for the outer ring, the inner ring and the balls, the durability of the pulley support double row ball bearing can be further improved. For example, as shown in FIG. 7 and 8, if for the retainer, one provided with a cylindrical surface portion 55 having a central axis parallel to the central axis of the retainer, on one part of the internal surface of the pocket 53a is used, then ensuring the filling amount of the grease into the inner space, and the efficient supply of grease to each of the rolling contact portions can be performed. Hence further improvement in durability of the double row ball bearing can be achieved.

Moreover, if for each of the balls, a ball made of steel which has been nitrided or carbonitrided (DS ball and UR ball), or a ball made of ceramic is used, even in the event of insufficient grease on the rolling contact portions, metal contact at the rolling contact parts can be avoided, and the durability of the pulley support double row ball bearing can be further improved. Similarly, if either an outer ring or an inner ring or both, made of steel which has been carbonitrided are used, again metal contact at the rolling contact parts can be avoided, and the durability of the pulley support double row ball bearing can be further improved.

### INDUSTRIAL APPLICABILITY

Since the pulley support double row ball bearing of the present invention is used in the configuration described above, it is possible to contribute to the miniaturization and lightening of various automobile auxiliary equipment such as compressors, while ensuring sufficient durability.

## Claims

1. A pulley support double row ball bearing comprising:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the inner diameter of the inner ring, and by externally fitting the inner ring to a support member and internally fitting the outer ring to a pulley, the pulley is rotatably supported on the periphery of the support member, wherein
near both ends of the inner circumferential surface of the outer ring, on the axially outside ends of continuous portions that exists between each of the outer ring raceways and a large diameter portion provided on both ends of this inner circumferential surface for stoppingly engaging with a seal ring, there is provided a chamfer having an axial length which is more than or equal to 30% of the axial length of the continuous portion, and which tapers in a direction of increasing inner diameter as it approaches the large diameter portion.

2. A pulley support double row ball bearing provided with:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the internal diameter of the inner ring, and by externally fitting the inner ring to a support member and internally fitting the outer ring to a pulley, the pulley is rotatably supported on the periphery of the support member, wherein
with regard to the radial dimensions, each of the outer ring raceways is made shallower than each of the inner ring raceways.

3. A pulley support double row ball bearing provided with:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the internal diameter of the inner ring, and by externally fitting the inner ring to a support member and internally fitting the outer ring to a pulley, the pulley is rotatably supported on the periphery of the support member, wherein
each of the retainers is designed such that inside surfaces of respective pockets are adjacent to and facing the rolling surface of each of the balls, and the radial positioning is determined by the balls, and a difference between a pitch diameter of a series of the balls and an inner diameter of the retainer is greater than a difference between an outer diameter of the retainer and the pitch diameter.

4. A pulley support double row ball bearing provided with:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the internal diameter of the inner ring, and by externally fitting the inner ring to a support member and internally fitting the outer ring to a pulley, the pulley is rotatably supported on the periphery of the support member, wherein
each of the retainers is designed such that inside surfaces of respective pockets are adjacent to and facing the rolling surface of each of the balls, and the radial positioning is determined by the balls, and a difference between an inner diameter of the outer ring and an outer diameter of the retainer is greater than a difference between an inner diameter of the retainer and an outer diameter of the inner ring.

5. A pulley support double row ball bearing provided with:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the internal diameter of the inner ring, and by externally fitting the inner ring to a support member and internally fitting the outer ring to a pulley, the pulley is rotatably supported on the periphery of the support member, wherein
a back-to-back duplex type contact angle is given to each of the balls arranged in a double row, and an inner diameter of the outer ring on an axially outside portion, being an anti-loading side, of each of the outer ring raceways is greater than the largest diameter of each of the outer ring raceways.

6. A pulley support double row ball bearing provided with:
an outer ring with an outer diameter of less than or equal to 65 mm and having a double row outer ring raceway on an inner circumferential surface;
an inner ring having a double row inner ring raceway on an outer circumferential surface;
balls with a diameter of less than or equal to 4 mm, provided as several balls so as to be free rolling between the outer ring raceways and the inner raceways;
a retainer which holds the balls so as to be free rolling; and
a seal ring, which exists between the inner circumferential surface of the outer ring and the outer circumferential surface of the inner ring, and seals off openings on both ends of an inner space accommodating the balls, and
a width related to the axial direction is less than or equal to 45% of the internal diameter of the inner ring, and by externally fitting the inner ring to a support member and internally fitting the outer ring to a pulley, the pulley is rotatably supported on the periphery of the support member, wherein
a face-to-face duplex type contact angle is given to each of the balls arranged in a double row, and an inner diameter of the outer ring on an axially inside portion, being an anti-loading side, of each of the outer ring raceways is greater than the largest diameter of each of the outer ring raceways.

7. A pulley support double row ball bearing according to any one of claim 1 through claim 6, wherein at least one member of a pulley to which the outer ring is internally fitted, and a support member to which the inner ring is externally fitted, is made from a material for which the coefficient of linear expansion is greater than that of the metal material constituting a raceway which is fitted to the member, and a thickness related to the radial direction of the raceway at a portion corresponding to a bottom part of a raceway groove formed in the raceway fitted to the member is more than or equal to 50% of the diameter of the balls of the ball bearing.
